# EUROPEAN PATENT APPLICATION

(11) **EP 4 632 650 A1**
(43) Date of publication of application: **15.10.2025**
(21) Application number: 24169957.8
(22) Date of filing: 12.04.2024
(51) Int. Cl.: G06Q 20/18, G06Q 20/20

(54) **METHODS AND DEVICES FOR A RETAIL TRANSACTION MANAGEMENT SYSTEM**

(71) Applicant: Diebold Nixdorf Systems GmbH, 33106 Paderborn (DE)
(72) Inventor: KANNAPINN, Sönke, 14163 Berlin (DE); GHARIBI, Arash, 10557 Berlin (DE)
(74) Representative: Viering, Jentschura & Partner mbB Patent- und Rechtsanwälte

(57) **Abstract**

A computing device including: a first interface configured to communicate with a point of sale, POS, system via a plurality of first sets of instructions; a second interface configured to communicate with a plurality of self-service terminals, SSTs, via a second set of instructions; a processor configured to: receive, from the POS system, a first instruction of the plurality of first sets of instructions, wherein the first instruction is addressed to an SST of the plurality of SSTs; convert the first instruction into a second instruction of the second set of instructions for a transmission to the SST.

## Description

### Technical Field

Various aspects relate generally to methods and devices (e.g. computing devices) for a retail transaction management system.

### Background

Retail transaction management systems are commonly used in modern commerce to facilitate efficient and seamless transactions between retailers and customers. These systems can encompass a variety of methods and devices aimed at optimizing the retail experience, streamlining operations, and enhancing customer experience. Presently, a retail transaction management system may include a transaction processing hub (e.g. a Point of Sale (POS) system) as a central entity for processing retail transactions and terminals, some of which may be self-service terminals (SSTs) (e.g. Self-Checkout (SCO) terminals), being used to perform transactional tasks.

SSTs are automated systems designed to enable users to independently access services or perform tasks without direct human assistance. They're utilized across various industries, offering users a convenient and efficient way to interact with systems, conduct transactions, or obtain services without needing continuous human support. One prevalent example of an SST includes self-checkout (SCO) terminals commonly found in retail settings (e.g. retail markets). These terminals allow customers to scan and pay for their items without assistance (e.g. unassisted) from retail operators, such as cashiers. Through the employment of user-friendly interfaces and scanning technology, SCO terminals may empower customers (i.e. users) to handle their purchases. SCO terminals may provide an environment for customers to complete the checkout process faster and anonymously while reducing personnel costs for the retail markets. Complimenting to such tasks, a transaction processing hub (e.g. a POS system) may serve as a central component within retail establishments for processing transactions, which may include software and hardware components to capture transactional data, process payments, apply discounts, and generate receipts. Additionally, the transaction processing hub may integrate with inventory management systems to monitor product sales and update stock levels in real-time, ensuring efficient supply chain management.

### Brief Description of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:
FIG. 1 shows an illustrative example of a retail environment;
FIG. 2 shows schematically an illustrative example of an SST;
FIG. 3 shows schematically a logical illustration of a retail transaction management system;
FIG. 4 shows schematically a logical illustration of a retail transaction management system in accordance with various aspects of this disclosure;
FIG. 5 shows schematically another illustration of the retail transaction management system;
FIG. 6 shows schematically an illustrative example of a logical representation of transaction information communication of the retail transaction management system;
FIG. 7 shows schematically an illustrative example of a representation of transaction information communication of the retail transaction management system;
FIG. 8 shows an example of a method.

### Description

The following detailed description refers to the accompanying drawings that show, by way of illustration, exemplary details, and aspects in which aspects of the present disclosure may be practiced. Aspects described herein are not necessarily mutually exclusive, as some aspects may be combined with other aspects to form further aspects. Various aspects may have been described in accordance with aspects associated with methods and various aspects may have been described in accordance with aspects associated with devices, but this should not be taken as limiting as the aspects described in accordance with methods apply to devices, and vice versa. Throughout the drawings, it should be noted that like reference numbers may be used structured similarly to depict the same or similar elements, features, and structures.

In retail environments, transaction processing hubs may function as backend transaction processing solutions within the framework of a retail transaction management system, while service terminals operate as frontend interfaces that may be equipped with specialized software for item scanning and transaction management to serve as frontend interfaces for customer interactions.

One of the challenges in providing a retail transaction management system including a transaction processing software operating at the backend and service terminals operating at the frontend may arise from the diverse landscape of transaction processing software and operational needs across retail environments. From the perspective of frontend operation, service terminals may need to interact with various types of transaction processing software, each may be tailored to different operational requirements, retail setups, and specific functionalities and may further be provided by various software providers. For instance, a large-scale supermarket may require a transaction processing software capable of handling high transaction volumes and complex inventory management tasks, while a boutique store may prioritize features for personalized customer interactions and loyalty programs. Additionally, transaction processing software may vary in compatibility with a corresponding set of instructions associated with respective hardware peripherals, communication protocols, and data formats, further complicating the retail transaction management system.

Such a tendency of compatibility of frontend devices (i.e. service terminals) to various types of transaction processing hubs (e.g. multiple transaction processing software) may underline the need for a central interface solution that can accommodate multiple transaction processing software and service terminals seamlessly. An interface may enable service terminals to communicate effectively with a selected transaction processing software of multiple possible transaction processing software, regardless of specific features or operational characteristics associated with the multiple possible transaction processing software. Such an interface may support various communication protocols and data formats to ensure interoperability across different systems. Furthermore, such an interface may offer flexibility and customization options to adapt to the specific requirements of different retail environments and transaction processing software. By providing a standardized and adaptable interface, retailers can streamline the integration process, reduce development costs, and ensure compatibility with a wide range of multiple possible transaction processing software and service terminals, ultimately enhancing operational efficiency and flexibility.

Illustratively, through the provision of the interface which provides a translation (i.e. conversion of instructions) between service terminals and different transaction processing hubs, service terminals configured to communicate with transaction processing hubs using the same set of designated instructions may communicate with multiple transaction processing hubs, each transaction processing hub configured to communicate with a corresponding set of designated instructions, noting that each transaction processing hub may include custom standardized or proprietary communication format to provide corresponding functions. Accordingly, a POS application agnostic service terminal may be employed.

Furthermore, any change at one or more sets of designated instructions of one or more transaction processing hubs may be handled at the interface without causing any changes in the set of designated instructions of the service terminals, which may potentially affect the interaction of the service terminals with the transaction processing hubs still operating with the same corresponding set of designated instructions (i.e. without any changes). Centralized handling of such changes at the interface may optimize the complexity of update operations to compensate for the changes.

Aspects associated with transaction processing hubs and service terminals have been described herein through examples of POS systems as an example of transaction processing hubs at the backend. In such constellations, service terminals are exemplified with SSTs, particularly SCO terminals, at the frontend. It is however to be noted that aspects described for POS systems may be also suitable for other types of transaction processing hubs, and similarly, aspects described for SCO terminals may be also suitable for other types of service terminals. The skilled person would recognize aspects that apply to any type of transaction processing hubs and/or service terminals and aspects that are directed to characterizations associated with SSTs and POS systems. In this constellation, transaction processing software may be referred to as POS application or POS software.

POS systems may operate as the backend of the retail transaction management system and may include a variety of functions essential for efficient transaction processing through functions of a POS application. While SSTs (e.g. SCO terminals) may handle tasks such as item scanning, user interfacing, and the like at frontend, a POS application may orchestrate backend operations which may include transaction processing, payment processing, inventory management, sales reporting, security, and/or integration with other systems of the retail transaction management system.

SSTs, operating at the frontend of the retail transaction management system, may collaborate with the POS system (e.g. POS application) to facilitate transaction processing. Each SST may include software, which may be referred to as a self-service software or self-service applications (SSA), that interfaces with the user through various input devices of the SST and communicates transaction data to the POS application for processing. Illustratively, customers interact with an SST to scan items, select payment methods, and complete transactions independently. The POS application may look up item prices, handle payment processing securely, update inventory records in real-time, and generate receipts for customers.

In accordance with various aspects described herein, a computing device may be configured to provide an interface between a POS system and an SST and/or preferably a plurality of SSTs, in which the interface may be configured to provide a translation of instructions exchanged between various POS application types (e.g. different POS applications) and the SSTs. Illustratively, based on the POS application deployed within the retail transaction management system, the computing device may determine (e.g. select) a set of instructions of the deployed POS application from a plurality of instruction sets designated for a plurality of different POS applications, and provide an interface between the determined set of instructions and a set of instructions of the SSTs. In this constellation, a set of instructions designated for a POS application may be referred to as a POS instruction set and a set of instructions of the SSTs may be referred to as an SST instruction set.

In some examples, a POS instruction set may include instructions of web-based services, such as designated instructions of one of a representational state transfer application programming interface (REST API) or WebSockets. For example, the POS system may include a POS application that is deployed as a cloud-based service in the cloud, which may be referred to as a Cloud-POS.

In some examples, the SST instruction set may similarly include designated instructions of REST-API or WebSockets, noting that the SST instruction set and the POS instruction set may be different. In other words, the POS instruction set may include a first set of instructions of one of REST-API or WebSockets and the SST instruction set may include a second of instructions of one of REST-API or WebSockets. In some examples, the computing device may provide a conversion between REST-API and Socket-Based Communications (i.e. convert Socket-Based Communications to REST-API and/or convert REST-API to Socket-Based Communications).

In some examples, the SSA may communicate with instructions of the Web-Socket protocol. Accordingly, a protocol converter may be provided, which may be implemented at the SST or by the computing device, which the protocol converter may be configured to provide a conversion between the Web-Socket protocol and other web-based services, such as designated instructions of one of a representational state transfer application programming interface (REST API) or WebSockets. In accordance with various aspects provided herein, an administration module may be provided, which may be implemented at the SST or by the computing device, to configure details of the POS application, such as an address identifier of the POS application for communication.

The term "operation area" may refer to a physical space or zone where a customer (i.e. a user) may interact with the one or more SSTs, for example, to complete a transaction (e.g. a purchase of an item). An operation area may include a designated vicinity around the one or more SSTs, where a user may interact with the one or more SSTs, and optionally with designated devices of the one or more SSTs to perform actions related to the transaction.

Illustratively, an operation area may include a scanning zone. A scanning zone may include a designated zone where a user may place items to rest prior to a scanning operation, and/or where the user may use a scanning device (e.g. a barcode or a QR code scanner). An operation area may include a bagging zone where the user may move items after their respective scanning operations. An operation area may include a payment zone where the user may make payments/deposits for the transaction. The payment zone may include one or more card readers, cash handling devices (e.g. to receive or provide cash), contactless payment terminals, etc. An operation area may include a user interfacing zone including devices through which the user may interact with the SST. The user interfacing zone may include a display (e.g. a touchscreen display), one or more buttons, switches, haptic feedback providing devices, etc. An operation area may include a designated zone in which the user may stand and/or sit down to interact with the SST.

It is to be noted that the operation area may be designated in accordance with one SST or in accordance with multiple SSTs according to a desired use case. As indicated above, the operation area may include multiple designated zones, and in accordance with aspects described herein, image acquisition devices may be deployed to capture video images of one or more zones of the multiple designated zones, a single designated zone of the multiple designated zones, a portion of one or more designated zone of the multiple designated zones.

The present disclosure may include various methods, functions, processes, etc. They may be performed by hardware components (e.g. a processor and/or a control device as described herein) or may be provided in computer-readable instructions which, if executed by a general purpose or special purpose processor or other logic circuits, cause the respective processor or logic circuits to perform them.

The term "processor" in this disclosure may refer to any entity capable of processing data and/or signals. Illustratively, the processor may execute designated functions that process data and/or signals in a designated manner. A processor can encompass various forms, such as analog circuits, digital circuits, analog and digital circuits, logic circuits. A processor may include one or more of: microprocessors, Central Processing Units (CPUs), Graphics Processing Units (GPUs), Digital Signal Processors (DSPs), Field Programmable Gate Arrays (FPGAs), Application Specific Integrated Circuits (ASICs), as examples, or any combination thereof. Any other kind of implementation of the respective functions, some of which may have been described in this disclosure in further detail, may also be understood as a processor, controller, or logic circuit. It is further to be noted that a plurality of the processors, controllers, or logic circuits described herein may be referred to as a single entity with equivalent functionality or the like, and conversely that any single processor, controller, or logic circuit detailed herein may be realized as two (or more) separate entities with equivalent functionality or the like.

The term "control device" (also referred as to controller) may be understood as any kind of a logic implementing entity, which may be special purpose circuitry or a processor executing software stored in a memory, firmware, or any combination thereof. Thus, a "control device" may refer to a processor and/or may include a hard-wired logic circuit or a programmable logic circuit such as a programmable processing entity, a microprocessor (e.g. a Complex Instruction Set Computer (CISC) processor, or a Reduced Instruction Set Computer (RISC) processor). A "control device" may, additionally or alternatively, include one or more processors executing software, e.g. any kind of computer program.

As used herein, "memory" is understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa. Furthermore, while memory may be depicted as separate from one or more other components (such as in the drawings), memory may also be integrated with other components, such as on a common integrated chip or a controller with an embedded memory. The term "software" refers to any type of executable instruction, including firmware.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of signals, e.g., electrical currents) and logical transmission (e.g., the transmission of digital data over a logical software-level connection). For example, a processor or controller may transmit or receive data over a software-level connection with another processor or controller in the form of signals, where the physical transmission and reception are handled by signal-layer components such as transceivers, and the logical transmission and reception over the software-level connection is performed by the processors or controllers. The term "communicate" encompasses one or both transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations. In various aspects, the communication may include the use of a designated communication protocol for the exchange of information.

The term "user interface" (herein also referred to as UI) may be understood as any type of component, hardware or software or a combination thereof, that is configured to interact with a user in a designated manner with the corresponding entity (e.g. SST). The user interface may encompass all elements, features, and/or mechanisms that enable a user to communicate, control, and/or operate the corresponding entity to accomplish designated tasks or access information. Illustratively, a user interface may facilitate the exchange of information (e.g. instructions, messages, etc.) between the interacting user and the corresponding entity, illustratively by providing a visual, a tactile, an audible interface, through which the user may input instructions, access information, and navigate functionalities. For example, the user interface may include hardware components (e.g. input and/or output devices, through which the user can provide inputs and receive outputs respectively) and software components (e.g. a graphical user interface, drivers, etc.), which may operate with an operating system of the corresponding entity.

In the following reference is made to an SCO terminal as exemplarily SST for demonstrative purposes, which is not intended to be limiting. The SCO terminal may be deployed in a retail environment. The retail environment may include a market area, in which various types of items are stored and provided for collection by a customer. One or more SCO terminals may be disposed of at the exit of the retail market. Once at the SCO terminal, the customer can locate items being purchased in the scanning zone and scan the barcodes of the items being purchased. Further, the customer can place scanned items in the bagging zone, which the bagging zone may include a bagging container including an optional weighing scale, so that it may be verified that the weight of a placed item matches stored weight information for the corresponding scanned item.

According to various aspects, an SCO terminal may be configured to perform a scanning procedure. In a scanning procedure, the SCO terminal may identify items that a customer wants to purchase. Identification of items may include scanning items via an item scanning device (e.g. a barcode scanner). An SCO terminal may display scanned items, prices, and quantities via its user interface (e.g. a display and a graphical user interface (GUI)) as they are added to the transaction via scanning. The SCO terminal may register scanned items for the transaction.

According to various aspects, the SCO terminal may be configured to perform a verification procedure. In a verification procedure, the SCO terminal may verify items scanned via the item scanning device. Verification of items may include weighing scanned items placed into the bagging container. Illustratively, the bagging container may be disposed a weight sensor that measures the weight of the items placed in the bagging container. The SCO terminal may perform further verification of items, which may be performed through more sophisticated methods, such as object detection. In some examples, the verification of items may include price verification, through the application of discounts, promotions, loyalty points, etc.

According to various aspects, the SCO terminal may be configured to perform a payment procedure. In a payment procedure, the SCO terminal may seek authorization from a payment provider or a bank for a financial transaction initiation received from the customer (e.g. via a credit or debit card, via contactless payment, etc.). The SCO terminal may communicate with a remote server to indicate the financial transaction initiation and to receive authorization for the financial transaction. Once the financial transaction is authorized, the SCO terminal may complete the transaction. For cash payment options, the payment procedure may include receiving cash (e.g. banknotes, coins, etc.) from cash handling devices, verification of received cash, calculation of total received cash, disposing of remainder change in view of the received cash and the amount of the transaction from the cash handling device, etc. According to various aspects, the SCO terminal may be configured to perform an inventory procedure.

In the above-mentioned procedures, the SCO terminal may communicate with a Point-of-Sale (POS) system to obtain information about scanned items (e.g. item information such as price, item description, weight information, etc.), adjust the quantity of an item within the inventory, receive information about promotions, discounts and/or loyalty points, provide information about the transaction, etc. For the performance of various procedures within the retail transaction management system, the SCO terminal (e.g. the SSA) and the POS application may communicate with each other over an established communication channel and exchange information about the corresponding transaction.

The references made to the SCO terminal may analogously apply to other types of SSTs. One or more of the functions, methods, and/or aspects performed by the SCO terminal may be analogously performed by an SST. Examples of an SST include: Automated Teller Machine (ATM), banking terminal, self-service vending machine (e.g., for snacks, alcohol, cigarettes, and/or jewelry), ordering kiosks, SCO terminal, self-service gas station, self-service scale, and/or a slot machine.

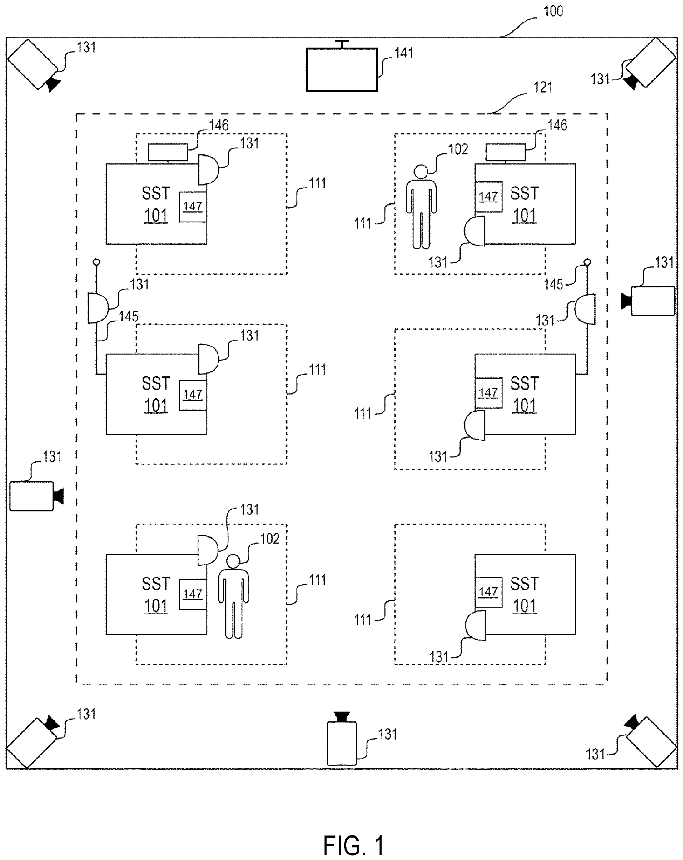

FIG. 1 shows an illustrative example of a retail environment. The retail environment 100 may include a plurality of SSTs 101 (e.g. SCO terminals) configured to provide self-checkout services in a designated operation area 121. Although the example illustrates 6 SSTs 101, the retail environment 100 may include any number of SSTs 101. Furthermore, although the example illustrates the SSTs clustered or cumulated in one designated operation area 121, the retail environment 100 may include any number of operation areas 121, designated for one or more SSTs 101. Furthermore, each SST 101 may have associated, other than the designated operation area 121, a specific operation area 111 designated for that particular SST 101. Illustratively, the specific operation area 111 may be designated for users 102 of the SSTs 101, in which users 102 may interact with the SSTs 101 (e.g. place items for scanning procedure, scan items, use the user interface of the SSTs 101, place items in bagging containers, receive receipts from the SSTs 101, etc.).

A plurality of image acquisition devices, illustrated as cameras 131, may be provided within the retail environment 100 for surveillance purposes. Cameras 131 may be deployed within the retail environment to monitor the designated operation area 121. One or some cameras 131 may have respective field of views (FoVs) configured to monitor the designated operation area 121, which may optionally monitor multiple respective specific operation areas 111 of multiple SSTs 101. One or some cameras 131 may have respective FoVs configured to monitor designated specific operation areas 111 of a single SST 101.

In some examples, one or more SSTs 101 may include one or more integrated cameras 131 to capture real-time images of users 102 interacting with the corresponding SSTs 101. For example, each SST 101 may include one or more cameras 131 for various purposes, such as age verification, product recognition, shrinkage and/or fraud detection, and/or surveillance. Each camera of the plurality of cameras 131 may be configured to provide captured visual data of at least a portion of the designated operation areas 111, 121.

In some examples, some or all SSTs 101 may be associated with lighting fixtures 145, such as pole lights 145 to enhance visibility within the operation area of the SSTs and to improve security and safety. In some aspects, one or more of the pole lights 145 may include or act as status lights, i.e. visual indicators to convey information about usage of associated SSTs 101. For example, they may exhibit lights with different colors to indicate a certain status pertinent to an activity that occurred at the respective SST. In an example, one or more of the pole lights 145 may exhibit a green light to indicate that a transaction is completed successfully and SST is ready for the next user or a yellow light to indicate that a checkout process is still in progress at the corresponding SST. Those lights, in that sense, may give users an indication about an ongoing and/or completed checkout process performed at the SSTs. In some aspects, one or more of the pole lights 145 may exhibit blinking lights in various colors for security purposes. In an example, one or more of the pole lights 145 may exhibit a blinking yellow light to indicate that the user interacting with the corresponding SST is in need of assistance from staff or a blinking red light to alert the management and/or security units. In some examples, one or more cameras may be attached to the lighting fixture (e.g. above SSTs 101). For example, this camera may be configured to observe users interacting with the corresponding SST 101 from above the corresponding SST 101.

In some examples, the retail environment 100 may include at least one security monitor 141. The security monitor 141 may be configured to display captured visual data of one or more cameras of the plurality of cameras 131. In some examples, the security monitor 141 may display visual data included in displayed video streams of at least one of the SSTs 101. For this purpose, the security monitor 141 may communicate with the at least one of the SSTs 101 to receive information representing displayed visual data of the at least one of the SSTs 101. In some examples, the security monitor 141 may display visual data included in displayed video streams of all of the SSTs. In a multiple displaying scenario, displayed screen of the security monitor 141 may be divided in regions, such that in each region a corresponding displayed visual data of one SST 101 of multiple SSTs 101 may be shown. In some examples, each of some or all SSTs 101 within the retail environment may further be associated with and/or include an external security monitor 146 (e.g. an external display).

Furthermore, each SST 101 may include a display device 147 that is different from the respective external security monitor 146 if exists. The display device 147 may be configured to provide information (e.g. transaction-related information) to users interacting with the SST 101 via a GUI. In accordance with various aspects described herein, the display device 147 may display visual data of selected video streams together with the transaction-related information over the GUI, while the corresponding external security monitor 146 may display the same visual data of the selected video streams (i.e. without the transaction-related information).

In some examples, the plurality of cameras 131 may communicate with the SSTs 101 or with the video server according to a designated communication protocol. Illustratively, at least some of the plurality of cameras 131, among other options, may be internet protocol (IP) cameras capable of capturing visual data and transmitting captured visual data over an IP network according to a designated communication technology using a designated communication protocol, such as a local area network (LAN), a wireless LAN (WLAN), cellular communication (3G, 4G, 5G, 6G), Bluetooth, etc. In some examples, the plurality of cameras 131 may send captured visual data according to a designated video transmission protocol, such as Real-Time Streaming Protocol (RTSP), Open Network Video Interface Forum (ONVIF), etc.

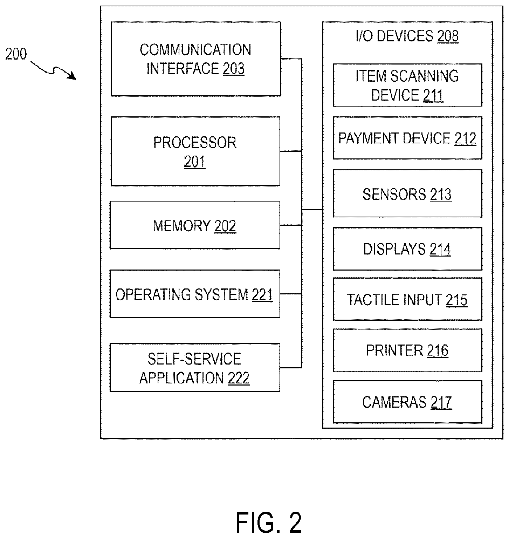

FIG. 2 shows schematically an illustrative example of an SST. The SST 200 may include a processor 201 to perform a variety of tasks in accordance with various aspects described herein. The processor 201 may include one or more processing means, the processor may include a central processing unit (CPU), a graphics processing unit (GPU), a hardware acceleration unit (e.g. one or more dedicated hardware accelerator circuits (e.g., ASICs, FPGAs, and other hardware)), a neuromorphic chip, and/or a controller. The processor 201 may be implemented in one processing unit, e.g. a system on chip (SOC), or a processor. In some examples, the processor 201 may include one or more cores as computation units, an arithmetic logic, a control unit, a storage unit, a plurality of registers, etc. The SST 200 may further include a memory 202. In some examples, the processor 201 and the memory 202 may form a control device, or alternatively a portion of the control device as described herein. The processor 201 and the memory 202 may be communicatively coupled to each other via an internal interface.

The SST 200 may further include a communication interface 203. The communication interface 203 may be configured to transmit and/or receive communication signals from a communication medium according to one or more communication technologies to communicate with other devices within the retail environment, which other devices may include some I/O devices or sensors (e.g. cameras) as described below, a computing device of the retail transaction management system, a POS system including a POS application, a video server, further SSTs within the retail environment, a security monitor, a security monitoring system, etc. The communication interface 203 may be configured to communicate with the other devices using wireless communication technologies (e.g. WLAN, cellular, Bluetooth, etc.) or wired communication technologies (e.g. USB, LAN, serial ports, etc.). The communication interface 203 may communicate with the other devices according to designated communication protocols.

The SST 200 may further include an operating system 221. For example, the memory 202 may store instructions of the operating system (OS) 221. The OS 221 may include instructions that may cause the processor 201 to manage and control hardware components of the SST (e.g. the processor 201, the memory 202, the communication interface 203, the I/O devices 208) and their operations, to facilitate communication between different hardware components, and to enable execution of applications (e.g. self-service application 222), which these operations may be provided by the processor performing OS functions. In some aspects, OS functions may include socket-based communication functions and protocol converter functions.

The SST 200 may further include a self-service application (SSA) 222. For example, the memory 202 may further store instructions of the self-service application (SSA) 222. The SSA 222 may include instructions that may cause the processor 201 to perform various operations associated with the performance of the transaction (e.g. purchase transaction). The processor 201 may, via execution of these instructions, perform SSA functions, with which the processor 201 may perform aspects described herein to perform the transaction of the user. Illustratively, SSA functions may communicate a POS system connected via the communication interface 203 to receive and/or send transaction-related information (which may also be referred to as transaction information). SSA functions may accordingly include obtaining item information, storing the list of scanned items, determining purchase information, generating GUI to be displayed with self-service GUI information, controlling procedures of the transaction based on received user inputs, etc., which may include receiving and sending information to the I/O devices 210.

The SST 200 may further include one or more input and output (I/O) devices 210 that are communicatively coupled to the internal interface and/or the communication interface 203. It is depicted in the illustrative example that the SST 200 includes I/O devices 210, however, this should not be taken as limiting, and the I/O devices 210 may be communicatively coupled to the SST 200 via the communication interface 203 configured to communicate with the I/O devices 210 according to designated communication rules, syntax, etc. such as a designated communication protocol.

The I/O devices 210 may include various hardware and/or software components to provide input to the SST 200, in particular in the form of information (e.g. instructions, messages, raw data, streams, etc.) for the processor 201 to process received input information to associate received input information for designated instructions. The I/O devices 210 may include input devices that are designated based on the use case of the SST 200. In some examples, the I/O devices 210 may include one or more buttons (e.g. a keypad, a keyboard, buttons with designated functions, etc.). The provided input may include, for example, information representing an interaction of a user using the respective input device (e.g. information representing a pressed button of the keypad or keyboard). Exemplarily, a customer may use a keypad to enter an item number or a personal identification number (PIN) of a credit or a debit card, or a keyboard may be one of the I/O devices 210 delivering user interactions by receiving keystrokes, or a touchpad may be one of the I/O devices 210 delivering user interactions by receiving touch inputs, etc.

The I/O devices 210 may be configured to provide an output based on instructions executed by the processor 201. The I/O devices 210 may include output devices that are designated depending on the use case of the SST 200. The provided output may include, in particular, an output to present various types of information or indications for a user. For example, a display may be one of the I/O devices 210 configured to display visual information to the user in the form of images, text, pictures, videos, etc.

It should be noted that an I/O device may be both an input device and an output device for the SST 200 within this context. For example, one of the I/O devices 210 may include a display configured to provide a visual output to a user. Furthermore, the display may be a touch screen display that is configured to receive input from the user interacting with the display. The contact interaction from the user may be detected by a touch input device. The touch input device may be configured to detect the interaction of the user with the display via a contact of the user. The touch input device may be configured to detect contact and/or movement of the user (e.g. via a finger, via a stylus, etc.,) while touching the display. Alternatively, the touch input device may be configured to detect the interaction of the user via another defined surface. For example, the touch input may include a touchpad that is configured to receive input from the user. Accordingly, such a display may be both an example of an input device and an output device.

The I/O devices 210 may include an item scanning device 211 configured to scan one or more items. Illustratively, the item scanning device 211 may be operated by the user in a scanning procedure. For example, the item scanning device 211 may include an optical scanning device, an RFID (radio-frequency identification) scanning device, or the like. The optical scanning device may illustratively include a barcode scanning device or an image scanning device. The barcode scanning device may include respective sensors to implement the scanning functionality, such as one or more infrared sensors, one or more cameras, and the like.

Illustratively, an item (e.g. transaction item) may have distinguishable characteristics, such as identifiers associated with the item in a designated form. For example, items may be provided with a barcode, a QR code, an RFID-tag, etc. The item scanning device 211 may detect these identifiers and provide information representative of an identifier of a scanned item to the processor 201 (i.e. to SSA functions). The processor 201 may, via SSA functions, determine transaction information based on the identifier of the scanned item. Illustratively for each scanned item, the processor 201 may determine (e.g. by receiving from a POS system) respective item information including item price, item description, item quantity, weight information, etc. of the respective scanned item using the respective identifier, and store the item information into the memory 202 for an established purchase transaction.

As the user scans each item of the transaction, the processor 201 may store the item information in a list (e.g. in the memory 202) as purchase information. The control device 106 may be further configured to determine payment information 204 based on the purchase information (e.g., the list 202 of products), e.g., considering the number of products and/or the amount to be paid for each of the products. Illustratively, payment information 204 may represent the total amount to be paid for the products as registered by the SST 100.

The I/O devices may include a payment device 212. The payment device 212 may be configured to interface with the user to receive a payment for the transaction. In some examples, the payment device 212 may include a card reader to read financial information stored in a credit card and/or a debit card. The card reader may read financial information and the SST 200 (e.g. via a communication circuitry of the payment device 212 itself or through the communication interface 203) may seek authorization from a payment provider or a bank for a financial transaction initiation received from the user, through communication with a remote server. Illustratively, the SSA functions may provide information about the financial transaction (e.g. amount of financial transaction) to the payment device 212. Once the financial transaction is authorized, the payment device 212 may indicate the authorization of the financial transaction. The card reader may be configured to read financial information from cards in any known methods, such as through magnetic reading (e.g. via magnetic strips of the card) and/or electrical reading (e.g. via chips of the card), and/or contactless reading (e.g. NFC). For cash payment options, the payment device 212 may include a cash handling device configured to receive cash (e.g. banknotes, coins, etc.), verify received cash, calculate the total amount of cash received for a financial transaction, dispose of the remainder change in view of the received cash and the amount of the transaction from the cash handling device, etc. In some examples, the POS system may include the payment device 212.

The I/O devices 208 may further include sensors 213 configured to monitor the operation area associated with the SST 200. In accordance with various aspects provided herein, the SSA functions may receive sensor data from the sensors 213. For example, the processor 201 may verify certain activities of the transaction based on sensor data received from the sensors 213, which may include measurements that depend on the types of sensor of the operation area. As illustrated before, one of the sensors 203 may include a weight sensor provided in the bagging area. The weight sensor may be configured to measure the weight of items placed into the bagging container. Based on sensor data provided by the weight sensor, the processor 201 may verify if the item placed into the bagging container is a scanned item based on item information (i.e. weight information) of the scanned item. The processor 201 may further detect if a non-scanned item is placed into the bagging container, illustratively if an item is placed into the bagging container without scanning, or if a detected weight change differs substantially from the weight of a scanned item. The sensors 213 may further include various types of sensors, such as motion sensors, proximity sensors, infra-red (IR) sensors, and the like. In some cases, the sensors 213 may include RFID sensors that may be used to recognize items with an RFID tag attached to them.

The I/O devices 208 may further include cameras 217 (e.g. the cameras 131). In some examples, one or more of the cameras 217 may be integrated within the SST 200 or attached to the housing of the SST 200. In accordance with various aspects provided herein, the processor 201 may, via the SSA functions, receive visual data from the cameras 217. In some aspects, the cameras 217 may operate as peripheral devices. Exemplary, as the sensors 213 may be used as a means to be utilized in a checkout process or a certain step of a respective checkout process, the cameras 217 may be used as peripheral devices monitoring the results and/or outputs of the process involving the use of a corresponding sensor (e.g., weight sensor). For example, one of the integrated cameras may be configured for detection of fraud and/or shrinkage. Illustratively, the camera for fraud/shrinkage detection may be configured to monitor an area (e.g. a portion of the operation area), such as the vicinity of at least one of the payment device 212 or the item scanning device 211, or the user of the SST 200. The processor 201 may receive visual data of the camera for fraud/shrinkage detection and provide received visual data to an input of a fraud/shrinkage detection algorithm which the processor 201 may execute.

I/O devices 208 may further include one or more display devices 214 configured to provide visual information to the user. The display device 214 may include a touch screen display configured to receive touch inputs from the user. The processor 201 may generate data to be displayed on the display device 214. In accordance with various aspects provided herein, the display device 214 may be communicatively coupled to the processor 201 through the internal interface. In some examples, the one or more display devices 214 may include an external display external to the SST 200, which the external display may be provided within the retail environment, or attached to the housing of the SST. In various aspects, the SMA functions and/or SSA functions may provide information included in the display data. The display device 214 may include any type of display configured to provide information and facilitate user interactions. Illustratively, the display device 214 may include a liquid crystal display (LCD), a light-emitting diode display (LED), an organic LED (OLED), or an electronic-ink display.

The I/O devices 208 may further include tactile input devices 215 to receive user input. Illustratively, the tactile input devices 215 may include a keyboard, a keypad, and/or buttons with designated functions. Furthermore, the I/O devices may include a printer 216 configured to print our receipts, and coupons, based on operations associated with the transaction.

In accordance with various aspects described herein, the SST 200 may include a user interface accessible to the user, which may be configured to receive user input, through designated interactions of the user, and which may be configured to provide visual, audible, or tactile output related to the transaction to the user. The user interface of the SST 200 may include designated I/O devices, some of which have been described herein, such as the display device 214, the tactile input devices 215, the payment device 212, etc., and further, a GUI which the processor 201 may generate based on GUI information stored in the memory 202. Illustratively, through interactions of the user with designated I/O devices, the processor 201 may receive, via OS functions information representing these transactions, and the OS functions may provide corresponding information representing these transactions to the SSA functions.

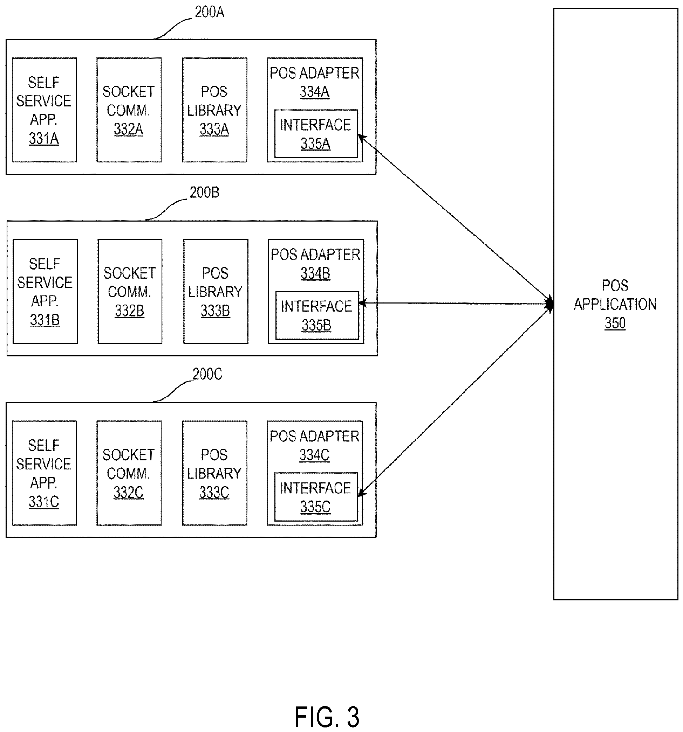

FIG. 3 shows schematically a logical illustration of a retail transaction management system. The retail transaction management system may include a POS application 350 and a plurality of SCO terminals 200A-C. Three SCO terminals have been depicted in this illustration, but the retail transaction management system may include any integer number of SCO terminals (e.g. 1, 2, 3, ..., N; N being an integer). Each SCO terminal 200A-C may be an SST (e.g. the SST 200) described in accordance with FIG. 2. Each SCO terminal 200A-C may include corresponding logical units configured to provide communication between the corresponding SCO terminal 200A-C and the POS application 350. A processor (e.g. the processor 201) of the corresponding SCO terminal 200A-C may implement such logical units (i.e. perform functions as described in this disclosure). Logical units of an SCO terminal 200A-C may include a self-service application unit 331A-C, a socket-based communication unit 332A-C, a POS library unit 333A-C, and a POS adapter unit 334A-C including an interface 335A-C that may be configured to communicate with the POS application 350.

The POS application 350 may be software executed in a computing device of a POS system, such as a central server or a computer within the retail environment or at a remote location. The POS application 350 may manage overall retail management operations including inventory, pricing, customer account, and transaction processing. In this constellation, SCO terminals 200A-C may be SSTs where customers within the retail environment can scan, bag, and pay for their purchases.

The SSA units 331A-C may include software executed by a processor of the respective SCO terminals 200A-C, which may be configured to handle an interface with customers and designated functionalities, such as scanning items, displaying product information, etc., which may be configured to communicate with the POS application 350 to exchange transaction information. An SSA unit 331A-C may perform SSA functions as described in this disclosure.

The socket-based communication units 332A-C may be configured to establish respective network connections between respective SCO terminals 200A-C and the POS application 350. The socket-based communication units 332A-C may use sockets (i.e. programming interfaces that allow data exchange between the SSA units 331A-C and the POS application 350), which may be configured to use any known protocols for socket-based communication, such as TCP/IP.

The POS library units 333A-C may include software, which may be provided by the respective SSA units 331A-C. Each POS library unit 333A-C may be configured to offer various functionalities for the respective SSA unit 331A-C to communicate with the POS application 350 through the respective POS adapter unit 334A-C. Each POS library unit 333A-C may be configured to act as an intermediary and/or may be configured to translate instructions (i.e. protocols, formats, procedures) between the respective SSA unit 331A-C and the POS adapter unit 334 A-C, and may be available in different programming languages, such as .NET, Java, C, and the like.

The POS adapter units 334A-C may include software configured to interact with the POS application 350. Each POS adapter unit 334A-C may be configured to translate instructions (i.e. protocols, formats, procedures) between the respective POS library unit 333A-C and the POS application 350. The POS adapter units 334A-C may further include software and hardware components as the interface 335A-C.

For an operational retail transaction management system, the POS application 350 and the SCO terminals 200A-C may exchange various types of information, which may be referred to as transaction information in this disclosure, some of which are sent in a direction from the SCO terminals 200A-C to the POS application 350 and some of which are sent in a direction from the POS application 350 to the SCO terminals 200A-C. Illustratively, the transaction information may include any type of information for the interaction between the POS application 350 and an SCO terminal 200A-C associated with a designated retail transaction management operation.

For example, transaction information may include product or item information including item names, item descriptions, prices, designated item identifiers (e.g. Stock Keeping Unit (SKU) codes), which the POS application 350 may send to the SCO terminals 200A-C. Illustratively, the corresponding SCO terminal 200A-C may be used during a checkout process and for calculating transaction totals. Transaction information may include transaction details that may illustratively include scanned item details, quantities, applied discounts, or promotions, which the SCO terminals 200A-C may send to the POS application 350. Illustratively, the POS application 350 may update inventory records, calculate transaction totals, and/or process a payment procedure for the corresponding transaction based on the transaction details.

In some examples, transaction information may include payment information including payment amount, a used payment method (e.g. cash, credit card, mobile payment), transaction authorization status, etc., which the SCO terminals 200A-C may send to the POS application. Illustratively, the POS application 350 may verify the payment details, process the transaction, and generate a receipt (e.g. invoice, a bill) if the payment is successful. Transaction information may include inventory information associated with stock levels of items, and their availability, which the POS application 350 may send to the SCO terminals 200A-C. Accordingly, the SCO terminals 200A-C may have up-to-date information on product availability. Transaction information may include promotional information associated with promotions and discounts offered in the retail environment, or loyalty rewards, which the POS application 350 may send to the SCO terminals 200A-C. Illustratively, the SCO terminals 200A-C may display applicable discounts and apply then necessarily to transactions based on the promotional information.

In addition to the types of information described above which are in essence directed to various details associated with the transaction, transaction information may include control information such as error messages and/or alerts with respect to the operation of the SCO terminals 200A-C and/or the POS application 350, which may be sent by one of the SCO terminals 200A-C and/or the POS application 350 to the other. Transaction information may further include various commands or requests (e.g. information request), and responses sent by one of the SCO terminals 200A-C and/or the POS application 350 to the other to facilitate the retail transaction management and/or the interaction between the SCO terminals 200A-C and/or the POS application 350.

In accordance with various aspects described herein, an entity of the retail transaction management system (e.g. a POS application, an SCO terminal, etc.) may send transaction information in accordance with an instruction set supported by a corresponding software of the entity. An instruction set (i.e. a set of instructions) may define at least one of the protocols, format, and/or procedures with respect to sending the transaction information to another entity and/or receiving the transaction information from another entity. An instruction may include a command sent by the entity to cause another entity to perform an action (e.g. a request to perform an action, an application programming interface (API) command). An instruction may include a provision of data (e.g. transaction information, API data) to the other entity.

Illustratively, the protocol may refer to (and may be one of) a network-based protocol such as a Transmission Control Protocol/Internet Protocol (TCP/IP), a Hypertext Transfer Protocol (HTTP), a WebSocket protocol (RFC 6455 by IETF). The format may refer to the structure or arrangement of data to be exchanged by the entity, in particular, how the respective data (to be sent or received) is organized, represented, and interpreted. The format may define the layout of data elements to be sent or received (e.g. in packets or frames), order of data fields, encoding or decoding schemes, etc. The procedures may refer to designated steps or actions that are to be followed to facilitate the data exchange, such as conditions or criteria with respect to requests, commands, and/or responses that are to be sent or received, data validation and/or error handling procedures to be applied, etc.

In accordance with various aspects provided herein, the POS application 350 may serve as the software component responsible for managing retail transactions, including payment processing, and inventory management. The POS application 350 may communicate with the SCO terminals 200A-C to coordinate transactional data exchange and inventory updates by exchange of transaction information. For this purpose, the POS application 350 and the SSAs 331A-C of the SCO terminals 200A-C may communicate over respective established connections, which may include a respective physical connection and at least one logical connection.

Commonly, different entities of the retail transaction management system may be provided by different manufacturers or providers, which may result in that an entity may communicate with another entity for an operational interaction according to its capabilities in terms of protocol, format, and/or procedures according to its respective instruction set. Illustratively, the POS application 350 may be configured to communicate with other entities (e.g. the SCO terminals 200A-C) of the retail transaction management system using a first instruction set, and each of the SCO terminals 200A-C, in particular each respective SSA 331A-C, may communicate with the POS application 350 using a second instruction set that may be different from the first instruction set. For this purpose, either SCO terminals 200A-C or the POS application 350 may include mechanisms that would facilitate conversion between instructions of the first instruction set and instructions of the second instruction set.

Illustratively, the POS adapters 334A-C of each SCO terminal 200A-C may be configured to interface with POS application 350 over respective established connections. Traditionally, the POS application 350 may communicate with each of the POS adapters 334A-C separately to exchange transaction information associated with the corresponding SCO terminal 200A-C over respective established physical and logical connections. In some examples, the POS application 350 may communicate with one of the SCO terminals 200A-C over an established logical connection between the POS adapter unit 334A-C of that SCO terminal 200A-C and the POS application 350 by using the first instruction set (i.e. the instruction set of the POS application 350). The corresponding SSA 331A-C of that SCO terminal 200A-C may also communicate with the corresponding POS adapter unit 334A-C with a socket-based communication using the second instruction set (i.e. the instruction set of the SSA 331A-C).

The POS adapter units 334A-C and the POS library units 333A-C may be configured to provide translation of received instructions between the first instruction set and the second instruction set. In other words, each POS adapter unit 334A-C and POS library unit 333A-C of a respective SCO terminal 200A-C may convert a first instruction received from the first instruction set into a second instruction received from the second instruction set, which is different from the first instruction. Similarly, each POS adapter unit 334A-C and POS library unit 333A-C of a respective SCO terminal 200A-C may convert a third instruction received from the second instruction set into a fourth instruction received from the first instruction set. Each POS adapter unit 334A-C may include the corresponding interface 335A-C configured to receive and transmit communication signals over a physical communication channel between the corresponding SCO Terminal 200A-C and the computing device including the POS application 350. Each interface 335A-C may be configured to provide at least a portion of network-based protocol processing for data provided/received by the respective POS adapter unit 334A-C.

In order to facilitate the communication between each of the SSAs 331A-C and the POS application 350, each SCO Terminal 200A-C may further include the corresponding socket-based communication unit 332A-C and the corresponding POS library unit 333A-C. Each socket-based communication unit 332A-C may facilitate socket-based communication between the respective SSA 331A-C and the POS application 350 using socket-based protocols. In particular, each socket-based communication unit 332A-C may be configured to perform communication using TCP sockets for logical connections.

Communication between the SSA 331A-C of each SCO terminal 200A-C and the POS application 350 may be established through the corresponding POS library unit 333A-C. The respective POS library unit 333A-C may be offered by the respective SSA 331A-C and may be available in different programming languages (e.g..Net, Java, C#). The respective POS library unit 333A-C may help the POS application 350 communicate with the respective SSA 331A-C through the respective POS adapter unit 334A-C. In other words, the respective POS library unit 333A-C may maintain the exchange of transaction information with the POS application 350 by providing instruction set of the respective SSA 331A-C (i.e. the second instruction set) for communication.

In other words, in order to facilitate communication of transaction information between POS applications and SCO terminals, noting the lack of a standardized interface in-between adopted by POS application and/or SSA unit providers, a structure as depicted in FIG. 3 may be implemented to provide conversion between protocols, formats, and/or procedures used by a particular POS application and protocols, formats, and/or procedures used by a particular SSA unit.

It is to be noted that the POS application 350 may be implemented at a location remote to the SCO terminals 200A-C. For example, the POS application 350 may be an edge-based and/or cloud-based service executed at one or more remote computing devices. Further, the instruction set of the POS application 350 may include instructions for web-based services, such as REST-API instructions and/or WebSocket instructions. Accordingly, the necessity to implement network-based communication between the POS application 350 and the SCO terminals 200A-C may bring further challenges to the interaction between entities due to the requirements to maintain network-based communication in addition to operational challenges associated with the use of different instruction sets.

Furthermore, the POS adapter units 334A-C may be tailored in accordance with the instruction set of the POS application 305. Correspondingly, different types of POS applications may require adaptation of the POS adapter units 334A-C to different instruction sets. Moreover, when there are changes in the instruction set of the POS application 305 (i.e. changes in protocol, format, or procedure of transaction information communication), this may impact each POS adapter unit 334A-C of the retail transaction management system. Additionally, due to the structure provided in accordance with FIG. 3, each SSA 331A-C is required to have a localhost connection to the respective POS adapter unit 334A-C to maintain communication between the respective SSA 331A-C and the POS application.

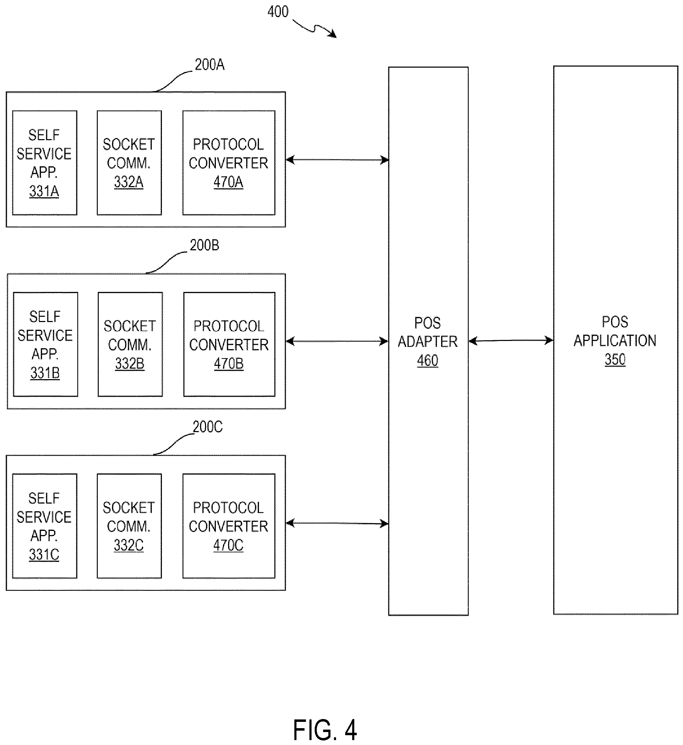

FIG. 4 shows schematically a logical illustration of a retail transaction management system 400 in accordance with various aspects of this disclosure. In view of the aspects described in accordance with FIGs. 2 and 3, the retail transaction management system 400 may include a POS application 350 and a plurality of SCO terminals 200A-C, noting that aspects described for entities of FIGs. 2 and 3 may apply to entities having the same reference numbers.

Three SCO terminals 200A-C have been depicted in this illustration, but the retail transaction management system 400 may include any integer number of SCO terminals (e.g. 1, 2, 3, ..., N; N being an integer). Each SCO terminal 200A-C may be an SST (e.g. the SST 200) described in accordance with FIG. 2. Each SCO terminal 200A-C may include corresponding logical units configured to provide communication between the corresponding SCO terminal 200A-C and the POS application 350. A processor (e.g. the processor 201) of the corresponding SCO terminal 200A-C may implement such logical units (i.e. perform functions as described in this disclosure). Logical units of an SCO terminal 200A-C may include a self-service application unit 331A-C, a socket-based communication unit 332A-C, and a protocol converter 470A-C.

In this example, the retail transaction management system 400 further includes a computing device that is external to the SCO terminals 200A-C, which may also be external to the POS application 350. The computing device may be configured to communicate with each of the SCO terminals 200A-C and the POS application using corresponding network-based communication protocols. The computing device may include a processor configured to execute software, which will be referred to as a POS adapter 460. The POS adapter 460 may be mainly configured to provide a conversion of received instructions (e.g. format, protocol, and/or procedure of data communication) of the SSA units 331A-C and received instructions (e.g. format, protocol, and/or procedure of data communication) of the POS application 350.

The socket-based communication units 332A-C may be configured to establish socket-based connections between respective SCO terminals 200A-C and the POS adapter 460. The socket-based communication units 332A-C may use sockets (i.e. programming interfaces that allow data exchange between the SSA units 331A-C and the POS adapter 460), which may be configured to use any known protocols for socket-based communication, which may illustratively include a network-based protocol as described in this disclosure (e.g. in accordance with FIG. 3),such as TCP/IP. A socket-based communication unit 332A-C may perform socket-based communication functions as described in this disclosure.

Furthermore, each SCO terminal 200A-C may include a corresponding protocol converter 470A-C. A protocol converter 470A-C may be configured to provide protocol data conversion between the corresponding SSA 331A-C and the POS adapter 460. Illustratively, for each socket connection between the corresponding SSA 331A-C and the POS adapter 460, the protocol converter 470A-C may encode data received from the SSA 331A-C, which the received data include data to be sent by the SSA 331A-C according to the instruction set of the SSA 331A-C, in accordance with a designated network communication protocol for transmission over a physical connection to the POS adapter 460. Similarly, the protocol converter 470A-C may decode data received from the POS adapter 460, which is received in accordance with the designated communication protocol, into received data, which the received data includes data to be sent to the SSA 331A-C according to the instruction set of the SSA 331A-C. A protocol converter 470A-C may perform protocol converter functions as described in this disclosure. Illustratively, a socket-based communication unit 332A-C may perform network stack processing functions at or above the transport layer of an Open Systems Interconnection (OSI) model (e.g. at a session layer) and a protocol converter 470A-C may perform network stack processing functions at or below the transport layer of the OSI model.

In this constellation, the POS adapter 460 may communicate with each SCO terminal 331A-C over one or more established socket-based connections between the respective SCO terminal 331A-C and the POS adapter 460. Furthermore, the POS adapter 460 may further communicate with the POS application 350 using a network communication protocol supported by the POS application 350.

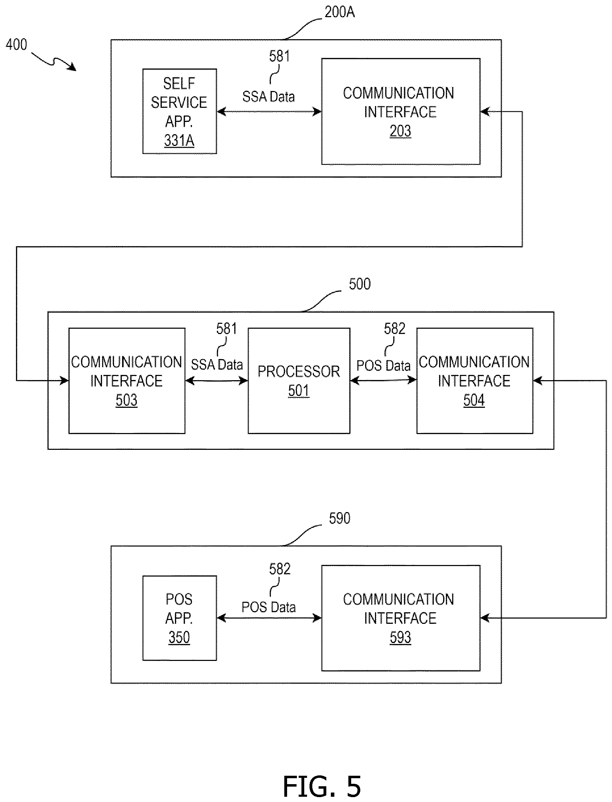

FIG. 5 shows schematically another illustration of the retail transaction management system 400, in which aspects with respect to the communication between one SCO terminal (e.g. one of the SCO terminals 200A-C) and the POS application 350 are depicted, noting that any of the SCO terminals 200A-C may communicate with the POS application 350 as described herein for the SCO terminal 200A. A processor of the SCO terminal 200A (which may be referred to as the SCO processor) may execute the SSA 331A. In this illustrative example, the retail transaction management system 400 includes a computing device 500 that may implement the POS adapter 460. In some examples, the computing device 500 may be provided within the retail environment including the SCO terminals 200A-C. In some examples, the computing device 500 may be a computing device of an edge network or a computing device of a cloud network at a remote location.

The SSA 331A may receive and/or provide instructions for the operation of the retail transaction management system 400 (i.e. send/receive transaction information) by receiving and/or sending SSA data 581. The SSA data 581 may illustratively include data representing instructions outputted by the SSA 331A or data representing instructions to be inputted to the SSA 331A according to the available instruction set configured by the SSA 331A. For example, the SSA data 581 may include API commands and/or API data. In some examples, the SSA data 581 may include an indication of one or more predefined methods (e.g. calls to methods (i.e. functions attached to designated objects)). In some examples, the SSA data 581 may further include arguments (i.e. specific values or data) passed to an indicated predefined method. In some examples, the SSA 331A may execute a code of the SSA 331A associated with a previously indicated method, and the SSA data 581 may include results (i.e. a returned value after execution of the code).

The SCO processor may provide further functions for communication of the SSA data 581, which is not depicted herein for brevity. Illustratively, the SCO processor may, via OS functions (e.g. corresponding socket-based communication functions and/or protocol converter functions), encode the SSA data 581 (i.e. transmit SSA data) according to a communication protocol that is designated for transmission of encoded data including the SSA data 581 to the computing device 500 including the POS adapter 460 and provide the encoded data to the communication interface 203. Further, the SCO processor may, via the OS functions, decode encoded data received via the communication interface 203 from the computing device 500, in which the encoded data is encoded according to the communication protocol. The encoded data received via the communication interface 203 may include the SSA data 581 (i.e. receive SSA data).

In accordance with various aspects described herein, the communication protocol may include a socket-based communication protocol, such as TCP/IP. In some examples, the communication protocol may include WebSocket communication protocol. The SCO terminal 200A and/or the computing device 500 may establish a WebSocket connection in-between. It is to be noted that a WebSocket connection may include a full-duplex communication channel established over TCP connections, to enable real-time, two-way communication between the SCO terminal 200A and the computing device 500. While not strictly a separate protocol, the WebSocket communication protocol may provide a higher-level abstraction on top of TCP, allowing persistent connections and bi-directional data flow.

In transmit direction, the SCO processor may format the SSA data 581 according to a predefined protocol (e.g. JavaScript Object Notation) for transmission over the established WebSocket connection and send the transmit data including the formatted data via the communication interface 203 to the computing device 500. In receive direction, the SCO processor may decode received data to obtain formatted data according to the predefined protocol. The SCO processor may further decode the formatted data to obtain the SSA data 581.

The computing device 500 may include a processor 501. The processor 501 may include a central processing unit (CPU), a graphics processing unit (GPU), a hardware acceleration unit (e.g. one or more dedicated hardware accelerator circuits (e.g., ASICs, FPGAs, and other hardware)), a neuromorphic chip, and/or a controller. The processor 501 may be implemented in one processing unit, e.g. a system on chip (SOC), or a processor. The computing device 500 may further include a memory (e.g. the memory 202). In some examples, the processor 501 and the memory may form a control device, or alternatively a portion of the control device as described herein. The processor 501 and the memory may be communicatively coupled to each other via an internal interface.

The computing device 500 may further include at least one communication interface 503, 504. The communication interface 203 may be configured to transmit and/or receive communication signals from a communication medium according to one or more communication technologies to communicate with other devices within the retail environment. In this illustrative example, the computing device 500 includes a first communication interface 503 configured to communicate with the SCO terminal 200A (e.g. SCO terminals 200A-C) according to the designated communication protocol for communication between the SCO terminal 200A and the computing device (which may be referred to as the first communication protocol). The computing device 503 may include a second communication device 504 configured to communicate with the POS system 590 according to a designated communication protocol for communication between the POS system 590 and the computing device (which may be referred to as the second communication protocol). The first communication protocol and the second communication protocol may be the same protocol or different protocols. The communication interfaces 503, 504 may be configured to communicate with the other devices using wireless communication technologies (e.g. WLAN, cellular, Bluetooth, etc.) or wired communication technologies (e.g. USB, LAN, serial ports, etc.). Each communication interface may include a corresponding transceiver configured to transmit and/or send communication signals.

The memory may store instructions of an operating system (OS). The OS may include instructions that may cause the processor 501 to manage and control hardware components of the computing device 500 (e.g. the processor 501, the memory, the first and second communication interfaces 503, 504) and their operations, to facilitate communication between different hardware components, and to enable execution of applications. In some aspects, OS functions may include socket-based communication functions and protocol converter functions as described for the SCO terminal 200A-C.

The memory may further store instructions of the POS adapter 460. These instructions may cause the processor 501 to perform various operations associated with facilitating communication between the SSA 331A of the SCO terminal 200A and the POS application 350. The processor 501 may, via execution of these instructions, perform POS adapter functions, with which the processor 501 may perform aspects described herein for the computing device 500.

In accordance with various aspects provided herein, POS adapter functions include the conversion of received instructions between a first instruction set associated with the POS system 590 (e.g. the instruction set of the POS application 350) and a second instruction set associated with the SCO terminal 200A (e.g. the instruction set of the SSA 331A). In some examples, POS adapter functions may include determination (i.e. selection) of a first instruction set from a plurality of instruction sets associated with the POS system 590 for the conversion of instructions between the first instruction set and the second instruction set. Illustratively, POS adapter functions may provide an interface to the SCO terminal 200A for various POS applications. Through a configuration procedure, POS adapter functions may identify a POS application implemented by the POS system 590 and select the instruction set of that POS application as the first instruction set. In such case determined instruction set may be referred to as an operational first instruction set (e.g. operational first set of instructions), and POS adapter functions may provide conversion of received instructions between the operational first instruction set and the second instruction set.

The computing device 500 may be connected to the POS system 590. The POS system 590 may include a POS computing device including a processor and a memory, which may be structurally similar to the processor and the memory described for the SCO terminal 200A or the computing device 500. The processor of the POS computing device may execute the POS application 350 that is configured to communicate with the SCO terminal using a designated instruction set of the POS application 350 (e.g. an instruction set of the plurality of instruction sets supported by the POS adapter functions).

In some examples, the instruction set of the POS application 350 may include an instruction set of a REST-API for transaction operation to exchange transaction information. In some examples, the POS application 350 may send or receive instructions to or from well-defined API endpoints of POS adapter functions. Accordingly, the POS application 350 implemented by the processor of the POS system 590 may receive and/or provide instructions for the operation of the retail transaction management system 400 (i.e. send/receive transaction information) by receiving and/or sending POS data 582. The POS data 582 may illustratively include data representing instructions outputted by the POS application 350 or data representing instructions to be inputted to the POS application 350 according to the available instruction set of the POS application 350 (e.g. REST-API instructions). The POS data 582 may include transaction information (i.e. transaction data) as described in this disclosure. For example, the POS data 582 may include API commands and/or API data. In some examples, the POS data 582 may include an indication of one or more predefined methods (e.g. calls to methods (i.e. functions attached to designated objects)) of the POS application 350. In some examples, the POS data 582 may further include arguments (i.e. specific values or data) passed to an indicated predefined method. In some examples, the POS application 350 may execute a code associated with a previously indicated method, and the POS data 582 may include results (i.e. a returned value after execution of the code).

The processor of the POS system 590 may provide further functions for communication of the POS data 582, which is not depicted herein for brevity. Illustratively, the SCO processor may, via OS functions, encode the POS data 582 (i.e. transmit POS data) according to a communication protocol that is designated for transmission of encoded data including the POS data 582 to the computing device 500 including the POS adapter 460 and provide the encoded data to a communication interface 593 of the POS system 590 that may be used to communicate with the computing device 500 according to any designated communication protocol. Further, the processor may, via the OS functions, decode encoded data received via the communication interface 593 from the computing device 500, in which the encoded data is encoded according to the designated communication protocol. The encoded data received via the communication interface 593 may include the POS data 582 (i.e. receive POS data).

In transmit direction, the processor of the POS system 590 may format the POS data 582 according to a predefined protocol (e.g. REST-API) for transmission to the POS adapter functions of the computing device 500, and send the transmit data including the formatted data via the communication interface 593 to the computing device 500. It is to be noted that REST-API is provided only as illustratively, and the predefined protocol may include any one of other communication protocols as described in this disclosure. In receive direction, the processor of the POS system 590 may decode received data to obtain formatted data according to the predefined protocol. The processor may further decode the formatted data to obtain the POS data 582.

As illustratively described, the computing device 500 may accordingly include a first interface configured to communicate with the POS system 590, in particular with the POS application 350, in which the first interface is used to receive and/or send the POS data 582. The first interface may be included by or communicatively connected with the POS adapter. In other words, the first interface may receive instructions provided by the POS adapter functions executed by the processor 501 to be sent to the POS application 350, and may receive instructions to be provided to the POS adapter functions, which the instructions are received from the POS application 350. Illustratively, in the example in which the POS application is configured to communicate, to exchange transaction information, via REST-API, the first interface may include REST-API endpoints designated by the operational first instruction set of the POS application 350.

As described herein, the first interface may allow the POS adapter functions to be able to communicate with different POS applications, each POS application may be configured to communicate according to its respective instruction set. Accordingly, the first interface may be configurable to communicate with the respective instruction set of a designated POS application. Therefore, illustratively the first interface may be configurable to communicate the POS data in accordance with multiple protocols, formats, and/or procedures, each different protocol, format, and/or procedure may indicate the use of a different instruction set.

The computing device 500 may further include a second interface configured to communicate with the SCO terminal 200A, in particular with the SSA 331A, in which the second interface is used to receive and/or send the SSA data 581. The second interface may be included by, or communicatively connected with the POS adapter. In other words, the first interface may receive instructions provided by the POS adapter functions executed by the processor 501 to be sent to the SSA 331A, and may receive instructions to be provided to the POS adapter functions, which the instructions are received from the SSA 331A. Illustratively, in the example in which the SSA 331A may be configured to communicate, to exchange transaction information, via REST API, the first interface may include REST-API endpoints designated by the instruction set of the SSA 331A. Additionally, or alternatively, the first interface may include WebSockets used to communicate with the SSA 331A.

In this constellation, the processor 501 may receive, from the POS system 590, logically from the POS application 350, the POS data 582 indicative of an instruction sent to the SSA 331A of the SCO terminal 200A. The instruction is an instruction from the first (operational) instruction set of the POS application 350. The instruction may be addressed to the SCO terminal 200A and/or the SSA 331A. Illustratively, the POS data 582 may include information representing an identifier for the SSA 331A, which may include an identifier for the SCO terminal 200A. The processor 501 may receive the POS data 582 via the first interface. The processor 501 may, via the POS adapter functions, convert the received instruction of the first operational instruction set into an instruction of the second instruction set. The converted instruction (i.e. the instruction of the second instruction set) may now refer to an SSA data 581 to be sent via the second interface. The second interface may include one or more established socket connections that carry data including the SSA data 581. The processor 501 may perform further operations to encode the SSA data 581 according to designated communication protocols, which may illustratively include a socket-based communication protocol (e.g. via WebSockets), and cause the communication interface 503 to send the encoded SSA data to the SCO terminal 200A. The communication interface 203 may receive the encoded SSA data, and the SCO processor may decode the encoded SSA data to obtain the SSA data 581 and provide the SSA data 581 to the SSA 331A.

Moreover, the processor 501 may receive, from the SCO terminal 200A, logically from the SSA 331A, the SSA data 581 indicative of an instruction sent to the POS application 350 of the POS system 590. The instruction is an instruction from the second instruction set of the SSA 331A. The instruction may be addressed to the POS application 350 and/or the POS system 590. Illustratively, the SSA data 581 may include information representing an identifier for the POS application 350, which may include an identifier for the POS system 590. The processor 501 may receive the SSA data 581 via the second interface. The processor 501 may, via the POS adapter functions, convert the received instruction of the second instruction set into an instruction of the first operational instruction set. The converted instruction (i.e. the instruction of the first operational instruction set) may now refer to a POS data 582. The processor 501 may perform further operations to encode the POS data 582 according to designated communication protocols, which may illustratively include a socket-based communication protocol (e.g. via WebSockets), and cause the communication interface 504 to send the encoded POS data to the POS system 590. The communication interface 593 may receive the encoded POS data, and the processor of the POS system 590 may decode the encoded POS data to obtain the POS data 582 and provide the POS data 582 to the POS application 350.

Through a socket-based connection established to exchange SSA data 581, illustratively via WebSockets, the exchange of the SSA data 581 may be performed via established persistent connections allowing continuous data exchange until the connection is closed. Established communication channels may be duplex channels for two-way real-time communication. On the other side, between the computing device 500 and the POS system 590, the communication may be similar via socket-based connections, or other types of connections may be used. In order to maintain a seamless connection between the POS application 350 and the SSA 331A, the processor 501 may monitor instructions received via the first interface, and perform the conversion between instruction sets in case of a detection of a received instruction.

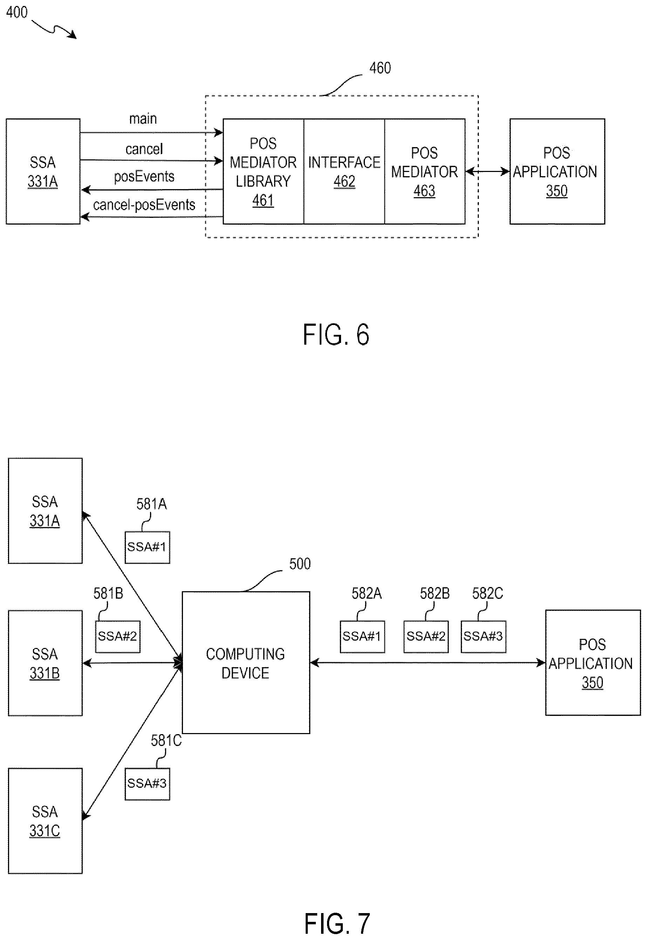

FIG. 6 shows schematically an illustrative example of the logical representation of transaction information communication of the retail transaction management system 400, in which aspects with respect to the communication between one SCO terminal (e.g. one of the SCO terminals 200A-C) and the POS application 350 are depicted, noting that any of the SCO terminals 200A-C may communicate with the POS application 350 as described herein for the SCO terminal 200A. The logical representation includes the SSA 331A implemented by the SCO processor of the SCO terminal 200A and the POS adapter 460 depicted to include logical blocks of a POS mediator library 461, a POS mediator 463, and an interface 462 in-between, which the POS adapter 460 may be implemented by the processor 501. Illustratively, the POS mediator library 461 and the POS mediator 463 may form a POS library (e.g. POS library unit) as described in this disclosure.

As described in accordance with previous FIGs, the POS application 350 and the POS adapter 460 may exchange instructions according to the instruction set of the POS application 350 via POS data 582. Noting that further blocks between the POS mediator 463 and the POS application are omitted for brevity, the POS mediator 463 may send or receive (output or input) the POS data 582 representing the instruction outputted or to be inputted to the POS mediator 463.

The POS mediator 463 may act as a centralized function to provide and maintain communication with POS application 350 for all of the SCO terminals 200A-C within the retail transaction management system 400. In one direction, the POS mediator may receive the POS data 582 sent by the POS application 350, in which the POS data 582 is addressed to the SSA 331A and is representative of an instruction sent by the POS application 350 to the SSA 331A according to the predefined instruction set of the POS application 350. The POS mediator 463 may provide the conversion, as described in this disclosure, from a plurality of first instruction sets, each instruction set being associated with a particular type of POS application, into the second instruction set of the SSA 331A. The POS mediator 463 may have been configured to select the instruction set of the POS application 350 as the first instruction set (i.e. first operational instruction set) as described herein.

Illustratively, the instruction sent by the POS application 350 may be represented by a high-level language (e.g. via API commands and API data, method calls for methods of the POS application 350 and arguments for indicated methods, etc.). The instruction sent by the POS application 350 may be configured to cause the SSA 331A to perform an action. The POS mediator 463 may convert the instruction received from the POS application 350, which is according to the first instruction set, into an instruction to be sent to the SSA 331A according to the second instruction set, which the instruction to be sent to the SSA 331A would cause the SSA 331A to perform the action indicated by the instruction sent by the POS application. In some examples, a single instruction sent by the POS application 350 according to the first instruction set may be converted into multiple instructions of the second instruction set. In some examples, multiple instructions sent by the POS application 350 according to the first instruction set may be converted into a single instruction of the second instruction set.

The POS mediator 363 may be configured to convert the instruction sent by the POS application 350 according to the first instruction set into an instruction of the second instruction set according to any known methods. Illustratively, the computing device 500 may store a mapping of instructions between instructions of the first instruction set and instructions of the second instruction set. In some examples, the mapping may be provided with associated functions, and/or subfunctions. It is to be noted that a conversion of instruction may include a conversion between two different protocols designated for the POS application 350 and the SSA 331A respectively, a conversion between two different formats (e.g. data formats) designated for the POS application 350 and the SSA 331A respectively, and/or a conversion between two different procedures designated for the POS application 350 and the SSA 331A respectively. In some examples, the conversion between two instructions may include a transport-layer conversion (i.e. a conversion of instructions at the transport layer).

The POS mediator 463 may perform the conversion in accordance with the POS mediator library 461. The POS mediator library 461 may provide a set of predefined functions, method calls, and/or APIs that the SSA 331A may recognize and perform various actions accordingly. In other words, the POS mediator library 461 may be a library defining the instruction set of the SSA 331A. The POS mediator library 461 may accordingly selectively issue instructions of the second instruction set to the SSA 331A in accordance with the orchestration of the POS mediator 463. For example, the POS mediator 463 may determine (e.g. identify based on the mapping information) that the first instruction of the first instruction set received from the POS application 350 is to be converted into a second instruction of the second instruction set. Accordingly, the POS mediator 463 may send a signal to the POS mediator library 461 via the interface 462 in-between to indicate that it is the second instruction to be issued to the SSA 331A. In some examples, the POS mediator 463 may further convert first arguments provided according to the first instruction set into second arguments according to the second instruction of the second instruction set. The POS mediator 463 may accordingly send the second arguments to the POS mediator library 461, so that the POS mediator library 461 may issue the second instruction, such that the second instruction includes the second arguments. Based on the signal received from the POS mediator 463, the POS mediator library 461 may output the second instruction according to the second instruction set. Illustratively, the POS mediator library may generate SSA data 581 corresponding to the POS data 582 received from the POS application 350, which the SSA data 581 is to be sent over the established socket connection to the SSA 331A.

In other direction, the instruction sent by the SSA 331A may also be represented by a high-level language (e.g. via API commands and API data, method calls for methods of the SSA 331A and arguments for indicated methods, etc.). The instruction sent by the SSA 331A according to the second instruction set (which is to be referred to as third instruction for brevity) may be configured to cause the POS application 350 to perform an action. The POS library 461 may receive the third instruction and may send a signal to the POS mediator 463 via the interface 462 in-between to indicate that the SSA 331A has sent the third instruction.

The POS mediator 463 may perform the conversion in accordance with the signal sent by the POS mediator library 461 indicating the third instruction. The POS mediator 463 may determine which instruction of the first instruction set corresponds to the third instruction of the second instruction set. Accordingly, the POS mediator 463 may generate a fourth instruction according to the first instruction set, in which the fourth instruction is configured to cause the POS application to perform the action indicated by the third instruction. The POS mediator 463 outputs the fourth instruction to be sent to the POS application 350.

In some aspects, the POS adapter 460 may communicate, over established one or more socket connections, with the SSA 331A in different synchronization groups identified according to information provided in a received instruction. In this illustrative example, 4 synchronization groups have been provided, namely a first synchronization group as "main" used to carry instructions from the SSA 331A, a second synchronization group as "cancel" used to carry canceling instructions from the SSA 331A, a third synchronization group as "posEvents" used to carry instructions to the SSA 331A, and a fourth synchronization group as "cancel-posEvents" used to carry canceling instructions to the SSA 331A. Each synchronization group may refer to a designated type of an established socket connection, which may always be required to be done one after another.

FIG. 7 shows schematically an illustrative example of a representation of transaction information communication of the retail transaction management system 400. In this illustrative example, it is depicted that the computing device 500 may communicate a first SCO terminal (e.g. the SCO terminal 200A) including a first SSA 331A, a second SCO terminal (e.g. the SCO terminal 200B) including a second SSA 331B, and a third SCO terminal (e.g. the SCO terminal 200C) including a third SSA 331C. The computing device 500 may further communicate with further SCO terminals as described herein.

As the computing device 500 may receive different instructions from the POS application 350 addressed to different SSAs, the processor 501 of the computing device 500 may be configured to send a converted instruction (according to the second instruction set) based on a received instruction (according to the first instruction set) addressed to a particular SSA from the POS application 350 to the addressed SSA. In this illustrative example, the POS application 350 may have sent a first POS data 582A addressed to the first SSA 331A, a second POS data 582B addressed to the second SSA 331B, and a third POS data 582C addressed to the third SSA 331C.

The processor 501 may monitor instructions received from the POS application to identify an addressee for each received instruction. In some examples, each respective POS data may include an identifier indicating the addressee (i.e. which SSA of the multiple SSAs) of the received instruction. The processor 501 may accordingly route each received instruction to be sent to an SSA addressed with the respective received instruction.

In this illustrative example, in a direction that carries transaction information from the POS application 350 to the SSAs 331A-C, the processor 501 may receive the first POS data 582A and identify that the instruction indicated by the first POS data 582A is addressed to the first SSA 331A. The processor 501 may convert the received first POS data 582A into a first SSA data 581A to be sent to the first SSA 331A via an established socket connection with the first SSA 331A. Similarly, the processor 501 may receive the second POS data 582B and identify that the instruction indicated by the second POS data 582B is addressed to the second SSA 331B. The processor 501 may convert the received second POS data 582B into a second SSA data 581B to be sent to the second SSA 331B via an established socket connection with the second SSA 331B. Similarly, the processor 501 may receive the third POS data 582C and identify that the instruction indicated by the third POS data 582C is addressed to the third SSA 331C. The processor 501 may convert the received third POS data 582C into a third SSA data 581C to be sent to the third SSA 331C via an established socket connection with the third SSA 331C.

In another direction that carries transaction information from the the SSAs 331A-C to the POS application 350, the processor 501 may receive the first SSA data 581A and identify that the instruction indicated by the first SSA data 581A is addressed to the POS application 350. The processor 501 may convert the received first SSA data 581A into a first POS data 582A to be sent to the POS application 350. Similarly, the processor 501 may receive the second SSA data 581B and identify that the instruction indicated by the second SSA data 581B is addressed to the POS application 350. The processor 501 may convert the received second SSA data 581B into a second POS data 582B to be sent to the POS application 350. Similarly, the processor 501 may receive the third SSA data 581C and identify that the instruction indicated by the third SSA data 581C is addressed to the POS application 350. The processor 501 may convert the received third SSA data 581C into a third POS data 582C to be sent to the POS application 350.

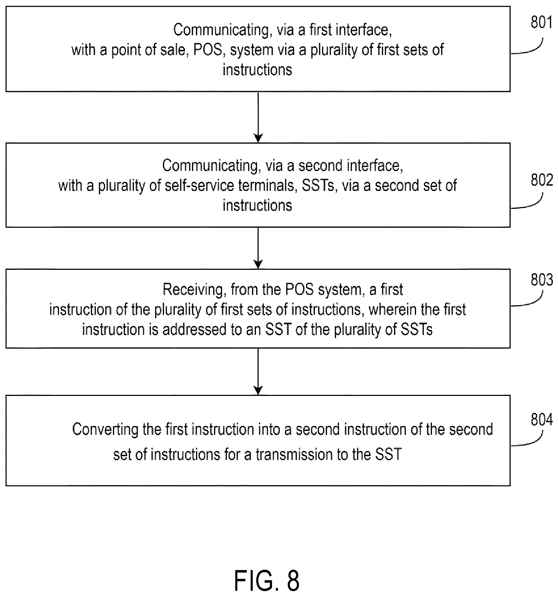

FIG. 8 shows an example of a method. The method may include communicating 801, via a first interface, with a point of sale, POS, system via a plurality of first sets of instructions; communicating 802, via a second interface, with a plurality of self-service terminals, SSTs, via a second set of instructions; receiving 803, from the POS system, a first instruction of the plurality of first sets of instructions, wherein the first instruction is addressed to an SST of the plurality of SSTs; converting 804 the first instruction into a second instruction of the second set of instructions for a transmission to the SST. In one example, the plurality of SSTs may include a plurality of SCO terminals, such that each SST including a corresponding SCO terminal. A non-transitory computer-readable medium may include one or more instructions which, if executed by a processor, cause the processor to perform the method.

In the following, various examples are provided with reference to the aspects described above.

In example 1, the subject matter includes a computing device including: a first interface configured to communicate with a point of sale, POS, system via a plurality of first sets of instructions; a second interface configured to communicate with a plurality of self-service terminals, SSTs, via a second set of instructions; a processor configured to: receive, from the POS system, a first instruction of the plurality of first sets of instructions, wherein the first instruction is addressed to an SST of the plurality of SSTs; convert the first instruction into a second instruction of the second set of instructions for a transmission to the SST.

In example 2, the subject matter of example 1, wherein the processor is further configured to: receive, from the SST, a third instruction of the second set of instructions; convert the third instruction into a fourth instruction of one of the plurality of first set of instructions for a transmission to the POS system.

In example 3, the subject matter of example 1 or example 2, wherein processor is further configured to encode the second instruction according to a socket-based communication protocol.

In example 4, the subject matter of example 3, wherein the second interface includes one or more established socket connections with the SST; wherein each established socket connection is configured to carry data designated for the respective established socket connection.

In example 5, the subject matter of example 3 or example 4, wherein the plurality of first set of instructions includes instructions of one of a representational state transfer application programming interface, REST API, or WebSockets.

In example 6, the subject matter of example 5, wherein the processor is further configured to convert received instructions between the socket-based communication protocol and the REST API.

In example 7, the subject matter of any one of examples 1 to 6, wherein the processor is further configured to determine an operational first set of instructions from the plurality of first sets of instructions based on information representing the POS system; wherein the processor is further configured to convert received instructions, such that the conversion is to or from the operational first set of instructions.

In example 8, the subject matter of any one of examples 1 to 7, wherein the processor is further configured to convert the first instruction into the second instruction using a transport-layer conversion function.

In example 9, the subject matter of any one of examples 1 to 8, wherein the processor is further configured to: monitor instructions received from the first interface to identify instructions addressed to the plurality of SSTs, such that each identified instruction is addressed to one or more SSTs of the plurality of SSTs; route one or more converted instructions corresponding to each identified instruction to the respective one or more SSTs.

In example 10, the subject matter of any one of examples 1 to 9, may further include an SST transceiver configured to communicate with the plurality of SSTs.

In example 11, the subject matter of any one of examples 1 to 10, may further include a POS-system transceiver configured to communicate with the POS system.

In example 12, the subject matter includes a retail transaction management system including: the computing device of any one of examples 1 to 11; the SST including an SST processor configured to: receive the second instruction from the computing device; configure the SST based on the received second instruction.

In example 13, the subject matter of example 12, wherein the SST processor further includes a protocol converter configured to convert the received second instruction and provide the converted second instruction to a self-service application.

In example 14, the subject matter of example 13, wherein the protocol converter is configured to convert received SST instructions between the socket-based communication protocol and the REST API.

In example 15, the subject matter of any one of examples 12 to 14, wherein the SST processor is further configured to determine an address identifier for the POS system; wherein the SST processor is further configured to generate instructions addressed to the address identifier for the POS system.

In example 16, the subject matter of any one of examples 12 to 15, may further include the POS system configured to generate instructions according to a set of the plurality of first sets of instructions.

In example 17, the subject matter includes a method including: communicating, via a first interface, with a point of sale, POS, system via a plurality of first sets of instructions; communicating, via a second interface, with a plurality of self-service terminals, SSTs, via a second set of instructions; receiving, from the POS system, a first instruction of the plurality of first sets of instructions, wherein the first instruction is addressed to an SST of the plurality of SSTs; converting the first instruction into a second instruction of the second set of instructions for a transmission to the SST.

In example 18, the subject matter of example 17, may further include: receiving, from the SST, a third instruction of the second set of instructions; converting the third instruction into a fourth instruction of one of the plurality of first set of instructions for a transmission to the POS system.

In example 19, the subject matter of example 17 or example 18, may further include encoding the second instruction according to a socket-based communication protocol.

In example 20, the subject matter of example 19, wherein the second interface includes one or more established socket connections with the SST; wherein each established socket connection is to carry data designated for the respective established socket connection.

In example 21, the subject matter of example 19 or example 20, wherein the plurality of first set of instructions includes instructions of one of a representational state transfer application programming interface, REST API, or WebSockets.

In example 22, the subject matter of example 21, may further include converting received instructions between the socket-based communication protocol and the REST API.

In example 23, the subject matter of any one of examples 17 to 22, may further include determining an operational first set of instructions from the plurality of first sets of instructions based on information representing the POS system; and converting received instructions, such that the conversion is to or from the operational first set of instructions.

In example 24, the subject matter of any one of examples 17 to 23, may further include converting the first instruction into the second instruction using a transport-layer conversion function.

In example 25, the subject matter of any one of examples 17 to 24, may further include: monitoring instructions received from the first interface to identify instructions addressed to the plurality of SSTs, such that each identified instruction is addressed to one or more SSTs of the plurality of SSTs; routing one or more converted instructions corresponding to each identified instruction to the respective one or more SSTs.

In example 26, the subject matter of any one of examples 17 to 25 including: receiving, by an SST processor, the second instruction; configuring the SST based on the received second instruction.

In example 27, the subject matter of example 26, may further include converting, by the SST processor, the received second instruction and provide the converted second instruction to a self-service application.

In example 28, the subject matter of example 27, may further include converting received SST instructions between the socket-based communication protocol and the REST API.

In example 29, the subject matter of any one of examples 26 to 28, may further include: determining, by the SST processor, an address identifier for the POS system; generating, by the SST processor, instructions addressed to the address identifier for the POS system.

In example 30, the subject matter of any one of examples 17 to 29, may further include generating, by the POS system, instructions according to a set of the plurality of first sets of instructions.

In example 31, a non-transitory computer-readable medium including one or more instructions which, if executed by a processor cause the processor to perform the method of any one of examples 17 to 30., While the disclosure has been particularly shown and described with reference to specific aspects, it should be understood by those skilled in the art that various changes in form and detail may be made therein without departing from the spirit and scope of the disclosure as defined by the appended claims. The scope of the disclosure is thus indicated by the appended claims and all changes, which come within the meaning and range of equivalency of the claims, are therefore intended to be embraced.

## Claims

1. A computing device comprising:
a first interface configured to communicate with a point of sale, POS, system via a plurality of first sets of instructions;
a second interface configured to communicate with a plurality of self-service terminals, SSTs, via a second set of instructions;
a processor configured to:
receive, from the POS system, a first instruction of the plurality of first sets of instructions, wherein the first instruction is addressed to an SST of the plurality of SSTs;
convert the first instruction into a second instruction of the second set of instructions for a transmission to the SST.

2. The computing device of claim 1,
wherein the processor is further configured to:
receive, from the SST, a third instruction of the second set of instructions;
convert the third instruction into a fourth instruction of one of the plurality of first set of instructions for a transmission to the POS system.

3. The computing device of claim 1 or claim 2,
wherein processor is further configured to encode the second instruction according to a socket-based communication protocol.

4. The computing device of claim 3,
wherein the second interface comprises one or more established socket connections with the SST;
wherein each established socket connection is configured to carry data designated for the respective established socket connection.

5. The computing device of claim 3 or claim 4,
wherein the plurality of first set of instructions comprises instructions of one of a representational state transfer application programming interface, REST API, or WebSockets.

6. The computing device of claim 5,
wherein the processor is further configured to convert received instructions between the socket-based communication protocol and the REST API.

7. The computing device of any one of claims 1 to 6,
wherein the processor is further configured to determine an operational first set of instructions from the plurality of first sets of instructions based on information representing the POS system;
wherein the processor is further configured to convert received instructions, such that the conversion is to or from the operational first set of instructions.

8. The computing device of any one of claims 1 to 7,
wherein the processor is further configured to convert the first instruction into the second instruction using a transport-layer conversion function.

9. The computing device of any one of claims 1 to 8,
wherein the processor is further configured to:
monitor instructions received from the first interface to identify instructions addressed to the plurality of SSTs, such that each identified instruction is addressed to one or more SSTs of the plurality of SSTs;
route one or more converted instructions corresponding to each identified instruction to the respective one or more SSTs.

10. A retail transaction management system comprising:
the computing device of any one of claims 1 to 9;
the SST comprising an SST processor configured to:
receive the second instruction from the computing device;
configure the SST based on the received second instruction.

11. The retail transaction management system of claim 10,
wherein the SST processor further comprises a protocol converter configured to convert the received second instruction and provide the converted second instruction to a self-service application.

12. The retail transaction management system of claim 11,
wherein the protocol converter is configured to convert received SST instructions between the socket-based communication protocol and the REST API.

13. The retail transaction management system of any one of claims 10 to 12,
wherein the SST processor is further configured to determine an address identifier for the POS system;
wherein the SST processor is further configured to generate instructions addressed to the address identifier for the POS system.

14. The retail transaction management system of any one of claims 10 to 13,
further comprising the POS system configured to generate instructions according to a set of the plurality of first sets of instructions.

15. A method comprising:
communicating, via a first interface, with a point of sale, POS, system via a plurality of first sets of instructions;
communicating, via a second interface, with a plurality of self-service terminals, SSTs, via a second set of instructions;
receiving, from the POS system, a first instruction of the plurality of first sets of instructions, wherein the first instruction is addressed to an SST of the plurality of SSTs;
converting the first instruction into a second instruction of the second set of instructions for a transmission to the SST.
